# EUROPEAN PATENT APPLICATION

(11) **EP 4 524 776 A1**
(43) Date of publication of application: **19.03.2025**
(21) Application number: 24196116.8
(22) Date of filing: 23.08.2024
(51) Int. Cl.: G06F 16/9535, G06F 16/9536

(54) **DATA PROCESSING METHOD, OBJECT PROCESSING METHOD, RECOMMENDATION METHOD, AND COMPUTING DEVICE**

(30) Priority: 29.08.2023 CN 202311102117
(71) Applicant: Alibaba (Chengdu) Software & Technology Co., Ltd., Chengdu Sichuan 610041 (CN)
(72) Inventor: DING, Lifang, Hangzhou, 311121 (CN); SUN, Shengjie, Hangzhou, 311121 (CN); SHI, Yongping, Hangzhou, 311121 (CN)
(74) Representative: Patentgruppen A/S

(57) **Abstract**

The embodiments of the present application provide a data processing method, an object processing method, a recommendation method, and a computing device. At least one user feature of sample user(s) is determined. First category identifier(s) corresponding to sample object(s) matching the sample user(s) is/are determined. A recognition model is trained using at least one user feature of the sample user(s) and the first category identifier(s), wherein the recognition model is used to determine at least one second category identifier matching a target user based on at least one user feature of the target user, the at least one second category identifier is used to construct a recall candidate set corresponding to the target user, the recall candidate set includes at least one object hit by the at least one second category identifier, and is used for determining at least one target object for performing a recommendation operation to the target user. The technical solution provided by the embodiments of the present application improves the recall effect.

## Description

### Field of the invention

The embodiments of the present application relate to the field of computer technology, and particularly to data processing methods, object processing methods, recommendation methods, and computing devices.

### Background of the invention

With the vigorous development of Internet technology and computer technology, the scale of online users and the scale of data have shown rapid development. Some online systems can provide objects such as commodities, content, or web pages for users to consume. In order to find objects that match users from among a massive number of objects and realize accurate user consumption, etc., recommendation systems have emerged. In practical applications, recommendation systems can be, for example, advertising systems to recommend advertising products to users.

A recommendation system usually involves two stages for object recommendation: a recall stage and a sorting stage. The recall stage refers to selecting a part of objects from a massive object data set as a recall candidate set first. The sorting stage refers to sorting objects included in the selected recall candidate set to determine target object(s) to be recommended according to a sorting result. The sorting stage can be divided into rough sorting, fine sorting, mixed sorting, etc. according to actual needs.

As can be seen from the above description, the quality of the objects selected in the recall stage will affect subsequent operations of the recommendation system and thus affect a recommendation result. Therefore, how to improve the recall effect has become a technical problem that one skilled in the art needs to solve.

### Summary of the invention

The embodiments of the present application provide data processing methods, object processing methods, recommendation methods, and computing devices to improve the recall effect.

In a first aspect, embodiments of the present application provide a data processing method, which includes:
determining at least one user feature of a sample user;
determining a first category identifier corresponding to a sample object matching the sample user;
training a recognition model using the at least one user feature of the sample user and the first category identifier, wherein:
   the recognition model is used to determine at least one second category identifier matching a target user based on at least one user feature of the target user; the at least one second category identifier is used to construct a recall candidate set corresponding to the target user; the recall candidate set includes at least one object hit by the at least one second category identifier, and is used to determine at least one target object for performing a recommendation operation on the target user.

Optionally, the method further includes:
dividing multiple objects in a object data set into multiple object groups according to object features, wherein:
determining the first category identifier corresponding to the sample object matching the sample user includes:
determining at least one object group to which the sample object matching the sample user belongs; and
generating the first category identifier corresponding to the sample object according to a group identifier of the at least one object group, wherein the recall candidate set includes one or more object groups being hit using the at least one second category identifier.

Optionally, dividing the multiple objects in the object data set into the multiple object groups according to the object features includes:
hierarchically clustering the multiple objects in the object data set to form a tree clustering structure based on the object features;
determining the multiple object groups based on the tree clustering structure; and
generating, according to a node identifier of at least one node involved in a path corresponding to any object group in the tree clustering structure, a group identifier of the object group.

Optionally, dividing the multiple objects in the object data set into the multiple object groups according to the object features includes:
calculating object similarities between the multiple objects according to the object features;
dividing the multiple objects in the object data set into the multiple object groups according to the object similarities between the multiple objects and different object grouping conditions; and
generating respective group identifiers corresponding to the multiple object groups in combination with an inclusion relationship between the multiple object groups.

Optionally, training the recognition model using the at least one user feature of the sample user and the category identifier includes:
selecting a pre-trained large language model as the recognition model;
generating an input sequence according to text description information of the at least one user feature of the sample user;
generating an output sequence according to the first category identifier; and
training the recognition model using the input sequence and the output sequence.

Optionally, the method further includes:
obtaining attribute description information of the sample object, the attribute description information being in a form of a picture and/or a text;
extracting object features of the sample object from the object attribute information using a feature extraction model, wherein:
   dividing the multiple objects in the object data set into the multiple object groups according to the object features includes:
      dividing a plurality of objects in the object data set that include at least cold objects, new objects, and hot objects according to the object features to obtain the multiple object groups;
      establishing index relationships between different objects in the object data set and object groups to which the different objects respectively belong; and
   determining the at least one object group to which the sample object matching the sample user belongs includes:
      looking up the index relationships according to the sample object matching the sample user to determine the at least one object group to which the sample object belongs.

Optionally, the method further includes:
dividing multiple users in a user data set that include at least new users, cold users and hot users, according to user attributes and/or user behaviors to obtain multiple user groups; and
generating respective index identifiers corresponding to the multiple user groups, wherein determining the at least one user feature of the sample user includes:
   determining at least one user group to which the sample user belongs; and
   generating user features of the sample user according to an index identifier of the at least one user group.

Optionally, the object includes promotional content corresponding to a promotional product, and dividing the multiple objects in the object data set into the multiple object groups according to the object features includes:
determining product features of respective promotional products corresponding to multiple promotional contents in the object data set; and
dividing the multiple promotional contents in the object data set into multiple object groups according to the product features.

In a second aspect, the embodiments of the present application provide an object processing method, which includes:
obtaining at least one user feature of a target user;
determining at least one second category identifier based on the at least one user feature of the target user using a recognition model, the recognition model being trained using at least one user feature of a sample user and a first category identifier corresponding to a sample object matching the sample user;
determining at least one object hit by the at least one second category identifier; and
constructing a recall candidate set corresponding to the target user based on the at least one object, the recall candidate set being used to determine at least one target object for performing a recommendation operation to the target user.

Optionally, the second category identifier is composed of multiple node identifiers, and determining the at least one second category identifier based on the at least one user feature of the target user using the recognition model includes:
using the recognition model to determine probabilities of matching of the target user with different node identifiers based on at least one user feature of the target user; and
determining a second category identifier composed of multiple node identifiers whose combined probability meets a matching requirement, the combined probability being calculated based on respective matching probabilities of the multiple node identifiers, wherein determining the at least one object hit by the at least one second category identifier includes:
   determining one or more object groups hit by the at least one second category identifier, the object groups being obtained by hierarchically clustering multiple objects in an object data set according to object features; and
determining at least one object included in the one or more object groups.

Optionally, determining the at least one second category identifier based on the at least one user feature of the target user using the recognition model includes:
when detecting that the target user meets a recommendation condition, using the recognition model to determine the at least one second category identifier based on the at least one user feature of the target user.

Optionally, obtaining the at least one user feature of the target user includes:
generating the at least one user feature of the target user according to attribute information and user behavior data of the target user.

Optionally, obtaining the at least one user feature of the target user includes:
obtaining the at least one user feature of the target user in response to a recommendation event.

Optionally, obtaining the at least one user feature of the target user includes:
determining at least one user group to which the target user belongs; and
generating a user feature corresponding to the target user based on an index identifier corresponding to the at least one user group.

Optionally, determining the second category identifier composed of the multiple node identifiers whose combined probability meets the matching requirement, and calculating the combined probability based on the matching probability of the at least node identifier includes:
selecting a predetermined number of second category identifiers each composed at least one node identifier according to a filtering rule of a descending order of combined probabilities.

Optionally, the method further includes:
determining, according to the recommendation requirement met by the target user, a predetermined number corresponding to the recommendation requirement; or
determining the predetermined number corresponding to a recommendation scenario according to a page type of a page currently browsed by the target user.

In a third aspect, embodiments of the present application provide a recommendation method, which includes:
obtaining at least one user feature of a target user;
using a recognition model to determine at least one second category identifier based on at least one user feature of the target user; the recognition model being obtained by training using at least one user feature of a sample user and a first category identifier corresponding to a sample object matched by the sample user;
determining at least one object hit by the at least one second category identifier;
constructing a recall candidate set corresponding to the target user based on the at least one object;
sorting the recall candidate set, and determining at least one target object according to a sorting result; and
performing a recommendation operation to the target user based on the at least one target object.

Optionally, the object includes promotional products or promotional contents corresponding to the promotional products, and
performing the recommendation operation to the target user based on the at least one object includes:
generating product recommendation information of at least one target promotional product, and sending the product recommendation information to a user terminal, to cause the user terminal to output the product recommendation information to recommend the at least one target promotional product to the target user; or
sending at least one target promotional content to the user terminal, to cause the user terminal to output the at least one target promotional content to recommend a promotional product corresponding to the at least one target promotional content to the target user.

Optionally, sorting the recall candidate set, and determining the at least one target object according to the sorting result include:
calculating promotion values corresponding to multiple objects in the recall candidate set; sorting the promotion values in a descending order; and selecting at least one target object from the sorting result in the descending order of the promotion values; or
determining multiple first-class objects and multiple second-class objects in the recall candidate set; calculating respective promotion values corresponding to the multiple first-class objects and the multiple second-class objects; and determining the at least one target object from the multiple first-class objects and the multiple second-class objects by taking a total promotion value corresponding to a plurality of objects in the recall candidate set satisfying a value requirement as an optimization goal.

In a fourth aspect, embodiments of the present application provide a computing device, which includes a processing component and a storage component, wherein:
the storage component stores one or more computer instructions; the one or more computer instructions are used to be called and executed by the processing component to implement the data processing method described in the first aspect, the object processing method described in the second aspect, or the recommendation method described in the third aspect.

In a fifth aspect, embodiments of the present application provide a computer-readable storage medium storing a computer program. When the computer program is executed by a computer, the data processing method described in the first aspect, the object processing method described in the second aspect, or the recommendation method described in the third aspect is implemented.

In the embodiments of the present application, at least one user feature of a sample user and a first category identifier corresponding to a sample object matching the sample user are determined, so that a recognition model is trained using the at least one user feature and the first category identifier. The recognition model is used to determine at least one second category identifier matching a target user based on at least one user feature of the target user, wherein the at least one second category identifier is used to construct a recall candidate set corresponding to the target user. The recall candidate set includes at least one object hit by the at least one second category identifier, which is used for determining at least one target object for performing a recommendation operation to the target user. In the embodiments of the present application, a recognition model is used to identify at least one second category identifier that matches a user, so that objects with the at least one second category identifier can be recalled as a recall candidate set for a target user to continue subsequent recommendation operations. The recognition model is used to recall the objects, which improves the recall effect. In addition, objects of a same category can be associated through a category identifier, so that new objects and cold objects can be associated with hot objects. Therefore, objects that are recalled according to a category identifier can include both new objects, cold objects, and hot objects, thereby solving the cold start problem of new objects and the problem of low recall rate of cold obj ects.

These aspects or other aspects of the present application will be made more concise and easier to understand in the description of the following embodiments.

### The drawings

In order to more clearly illustrate technical solutions in the embodiments of the present application or existing technologies, drawings required for describing the embodiments or the existing technologies are briefly introduced as follows. Apparently, the drawings described below are some embodiments of the present application. For an ordinary person skilled in the art, other drawings can also be obtained based on these drawings without making any creative work.
FIG. 1 shows a flowchart of an example data processing method provided by the present application.
FIG. 2 shows a schematic diagram of an example hierarchical clustering structure of the present application in a practical application.
FIG. 3 shows a flowchart of an example object processing method provided by the present application.
FIG. 4 shows a schematic diagram of an example scene interaction of the present application in a practical application.
FIG. 5 shows a schematic structural diagram of an example data processing apparatus provided by the present application.
FIG. 6 shows a schematic structural diagram of an example object processing apparatus provided by the present application.
FIG. 7 shows a schematic structural diagram of an example computing device provided by the present application.

### Detailed description

In order to enable one skilled in the art to better understand the solution of the present application, the technical solution in the embodiments of the present application will be described clearly and completely in combination with the drawings in the embodiments of the present application.

In some processes described in the specification and claims of the present application and the above drawings, multiple operations appearing in a specific order are included. However, it should be clearly understood that these operations may not be executed in an order in which they appear in this text or may be executed in parallel. Serial numbers associated with operations, such as 101, 102, etc., are only used to distinguish different operations, and the serial numbers themselves do not represent any order of execution. In addition, these processes may include more or fewer operations, and these operations may be executed in sequence or in parallel. It should be noted that descriptions such as "first", "second", etc. in this text are used to distinguish different messages, devices, modules, etc., and do not represent an order of precedence, nor do they limit "first" and "second" to different types.

The technical solution of the embodiments of the present application can be applied to object recommendation scenarios. Existing processing methods for implementing object recommendation usually include a recall stage and a sorting stage. The technical solution of the embodiments of the present application proposes an improved object recall method to improve the recall effect.

Objects in this text may refer to online data forms, such as commodities, articles or web pages.

When implementing the present application, the inventors found that traditional methods of object recall usually include inverted index, collaborative filtering, vector retrieval, etc. These traditional implementation methods are usually based on a discrimination method, that is, recall an object using a degree of matching between a user and the object. For example, in a traditional recall method, a scoring model can be used to calculate a matching score between a user and an object, so as to determine whether the object is recalled based on the matching score. However, this traditional method of implementation is not good enough to deal with a cold start of new objects, and there is a data Matthew problem, which may possibly cause a failure of recalling some new objects. In addition, directly calculating matching scores between a user and objects may lead to a lack of diversity in recommendation results and a lack of generalization. Therefore, the recall effect of the traditional implementation methods is not good enough.

In order to improve the recall effect, the inventors have proposed a technical solution of the embodiments of the present application after a series of studies. In the embodiments of the present application, a recognition model is used to identify at least one second category identifier that matches a target user, so that objects with the at least one second category identifier can be recalled as a recall candidate set to continue a subsequent recommendation operation. A recognition model is used to recall objects, which improves the recall effect. In addition, different objects can be associated through category identification, so that new objects and cold objects can be associated with hot objects. Objects that are recalled according to category identification can include both new objects, cold objects, and hot objects, thereby solving the cold start problem of new objects and the problem of low recall rate of cold objects, and avoiding the Matthew effect. In addition, combining with a method of determining category identification, it can be suitable for performing recommendation in the entire object space, recommendation results can be flexibly adjusted, and the diversity and accuracy of the recommendation results can be taken into account, etc., thus improving generalization.

It should be noted that the use of user data may be involved in the embodiments of the present application. In practical applications, user-specific personal data can be used in the solution described herein within the scope permitted by applicable laws and regulations in accordance with the requirements of applicable laws and regulations of the country where it is located (for example, a user's explicit consent, the user is effectively notified, etc.).

It should be noted that the technical solution of the embodiments of the present application is applicable to a network virtual environment, and a user described generally refers to a "virtual user". A real user can register a user account in a server by registration to obtain a user identity in the network environment.

The technical solution in the embodiments of the present application will be clearly and completely described below in conjunction with the drawings in the embodiments of the present application. Apparently, the described embodiments are only a part and not all of the embodiments of the present application. Based on the embodiments in the present application, all other embodiments obtained by one skilled in the art without making any creative work are within the scope of protection of the present application.

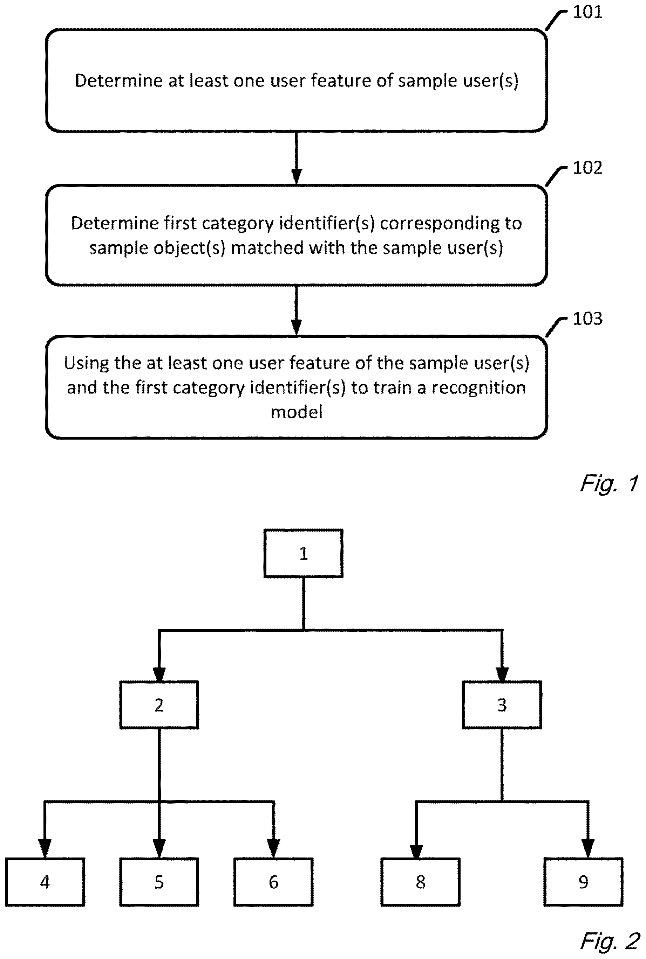

FIG. 1 is a flowchart of an example data processing method provided by the embodiments of the present application. The technical solution of the embodiments of the present application can be applied to a recommendation system, and can be specifically executed by a server of the recommendation system. In practical applications, the recommendation system can be a system that is the same as or different from an online system that provides objects, which the present application does not impose any specific limitations thereon. In a specific implementation, the recommendation system can be an advertising system, and objects can be promotional products or can be promotional contents corresponding to the promotional products. A promotional product can be a commodity, and apparently can also refer to a virtual object such as an article or a web page.

In practical applications, the recommendation system can be composed of a server and a client, and a connection is established between the client and the server through a network. The network provides a medium for a communication link between the client and the server. The network can include various connection types, such as wired, wireless communication links or optical fiber cables, etc. The client can interact with the server through the network to receive or send messages, etc.

The client can be a browser, an APP (Application), or a web application such as H5 (HyperText Markup Language5, Hypertext Markup Language Version 5) application, or a light application (also known as applet, a lightweight application) or a cloud application, etc. The client can be deployed in an electronic device, and needs to rely on the device to run or certain apps in the device to run, etc. For example, the electronic device can have a display screen and support information browsing, etc., and may be a personal mobile terminal such as a mobile phone, a tablet computer, a personal computer, a desktop computer, a smart speaker, a smart watch, etc. For ease of understanding, FIG. 1 mainly uses a form of a device to represent the client. Various other types of applications can usually be configured in the electronic device, such as human-computer dialogue applications, model training applications, text processing applications, web browser applications, shopping applications, search applications, instant messaging tools, email clients, social platform software, etc. The electronic device can refer to a device used by a user, and have functions of computing, surfing the Internet, communicating, etc. required by the user, and may be, for example, a mobile phone, a tablet computer, a personal computer, a wearable device, etc. The electronic device may generally include at least one processing component and at least one storage component. The electronic device may also include basic configurations such as a network card chip, an IO bus, audio and video components, which are not limited in the present application. Optionally, according to a form of implementation of electronic device, some peripheral devices, such as keyboards, mice, input pens, printers, etc., may also be included, which are not limited in the present application.

The server may include a server that provides various services, such as a server for model training, and a server for object processing, etc.

It should be noted that the server can be implemented as a distributed server cluster composed of multiple servers, or can be implemented as a single server. The server can also be a server of a distributed system, or a server combined with a blockchain. The server can also be a cloud server that provides basic cloud computing services such as cloud services, cloud databases, cloud computing, cloud functions, cloud storage, network services, cloud communications, middleware services, domain name services, security services, content delivery networks (CDN), and big data and artificial intelligence platforms, or an intelligent cloud computing server or intelligent cloud host with artificial intelligence technology.

The method may include the following steps:
101: Determine at least one user feature of sample user(s).
102: Determine first category identifier(s) corresponding to sample object(s) matched with the sample user(s).

In the embodiments of the present application, at least one user feature of sample user(s) and first category identifier(s) of matched sample object(s) can be used as training data to train a recognition model.

The sample user(s) and the sample object(s) matched by the sample user(s) can be determined from historical record data of an online system, etc. The online system provides objects for users to perform a series of user behaviors such as purchase or browsing. Optionally, the sample user(s) can select hot user types in the online system. A hot user type can, for example, refer to a user type whose number of user behaviors performed on an object is greater than a certain number. All users corresponding to the online system can constitute a user data set, and it can be understood that the user data set can be updated as users enter into the online system.

The at least one user feature can include, for example, one or more of a user behavior, a user attribute, or a search keyword. The user attribute can include, for example, nationality, age, user source, and/or gender. The user source can include, for example, a third-party search system, a recommendation system, social media, or the online system itself. The search keyword can be input by a sample user in a search scenario based on an object search function provided by the online system.

In addition, as another optional method, the user data set can also be pre-grouped according to user similarity, etc., to obtain multiple user groups, and index identifiers corresponding to the multiple user groups can be generated. A user feature corresponding to sample user(s) can be generated according to an index identifier of at least one user group to which the sample user(s) belong(s). An index identifier of each user group to which sample user(s) belong(s) can be used as a user feature. Apparently, corresponding index identifiers of at least one user group to which sample user(s) belong(s) can be combined and sorted as a user feature. Therefore, at least one user feature can include a user feature generated according to the index identifier of at least one user group to which the sample user(s) belong(s), and apparently, can also include one or more of a user behavior, a user attribute, a user source, or a search keyword as described above.

A degree of user similarity between different users can be determined, for example, based on user attributes and/or user behaviors of different users.

A sample object matched with a sample user can, for example, refer to an object on which the sample user(s) perform(s) a target behavior. The target behavior can, for example, refer to a click behavior, a collection behavior, a browsing behavior or a purchase behavior, etc. Performing the target behavior on any object may represent that the sample user prefers such object, etc. Therefore, optionally, the method may also include: combining user behavior data of the sample user(s), taking an object on which a target behavior is performed as the sample object matched with the sample user. From historical record data, an object on which a sample user performs a target behavior can be determined as a sample object matched with the sample user.

A category identifier can be used to represent an object category, and the object category can, for example, refer to an object type, a color, a specification, or a price range, etc. Different objects with a same category identifier have same object feature(s), such as belonging to a same category, a same color, a same specification, or a same price range, etc.

There are multiple implementation methods for determining a first category identifier corresponding to a sample object, which will be described in detail below.

From an object data set, sample object(s) matching sample user(s) can be determined. The object data set can be, for example, constructed based on objects provided by multiple object providers participating in a promotion task. The promotion task can be set by an online system, etc. The object data set can be dynamically updated, and can be changed according to changes in the objects provided by the object providers participating in the promotion task. In a practical application, the promotion task may be, for example, an advertising task. An object provider can participate in the advertising task for a fee, so that a better advertising promotion services etc., can be obtained.

103: Using the at least one user feature of the sample user(s) and the first category identifier(s) to train a recognition model.

At least one user feature of the sample user(s) can be used as model input data, and the first category identifier(s) can be used as output data, to train the recognition model. Optionally, respective matching probabilit(ies) (0 or 1, 0 represents that a sample user does not match a sample object, and 1 indicates that the sample user matches the sample object) of the sample user(s) and the first category identifier(s) can be used as training label(s) to train the recognition model.

The recognition model can be implemented by a neural network structure of encoder-decoder, for example, a transformer model (a neural network model), etc., so input data and output data of the recognition model can be implemented in a form of sequence.

Therefore, optionally, an input sequence may be generated based on text description information of at least one user feature of the sample user(s), and an output sequence may be generated based on the first category identifier(s). The recognition model may be trained using the input sequence and the output sequence.

An input sequence may be obtained by performing word segmentation processing and vector conversion, etc., on text description information, which is not limited by the present application. An output sequence may be composed of, for example, first category identifier(s), etc. Apparently, an output sequence can also be obtained by first determining a data sequence composed of multiple category identifiers, and then updating position(s) of first category identifier(s) to 1, and position(s) of remaining category identifier(s) to 0, for example. Apparently, the present application does not limit a specific form of implementation for an output sequence.

The recognition model obtained through training can be used to determine at least one second category identifier matching a target user based on at least one user feature of the target user. The at least one second category identifier is used to construct a recall candidate set corresponding to the target user. The recall candidate set includes at least one object hit by the at least one second category identifier, and is used to determine at least one target object for performing a recommendation operation to the target user. The target user may refer to any user to whom a recommendation is to be given. For example, in an implementation scenario, the target user may refer to a new user or a cold user, etc., wherein the new user or cold user may refer to a user whose number of user behaviors is less than a certain number, etc., wherein the number of user behaviors of a new user is less than user behavior data corresponding to a cold user. Alternatively, a new user may refer to a user whose time period of registration is less than a certain time, etc., and apparently, since the time period of registration of the new user is relatively short, the number of user behaviors that are generated is relatively few. Therefore, cold users may include new users.

The at least one object hit by the at least one second category identifier is used to construct a recall candidate set corresponding to the target user. The at least one object may include a new object, a cold object and/or a hot object, etc. A new object may refer to, for example, an object whose listing time in an online system is less than a certain time. A cold object may refer to an object whose corresponding number of user behaviors in an online system is less than a certain number. A hot object may refer to an object whose corresponding number of user behaviors in an online system is greater than a certain number, etc. Apparently, since a new object has been listed recently, the corresponding number of user behaviors is relatively few. Therefore, cold objects may include new objects. Cold objects or new objects also have corresponding object categories and category identifiers. Therefore, new objects, cold objects, and hot objects of a same object category can be recalled through the at least one second category identifier. As such, new objects and cold objects can also be recalled, which can solve the cold start problem of new objects and the problem of low recall rate of cold objects.

The recognition model can be based on at least one user feature of the target user, and respective matching probabilities of the target user with different category identifiers can be calculated, so that at least one second category identifier can be determined according to the matching probabilities.

In the embodiments of the present application, a recognition model is used to recall objects, which improves the recall effect. In addition, different objects can be associated with each other through category identifiers. As such, new objects and cold objects can be associated with hot objects, so that the cold start problem of new objects and the problem of low recall rate of cold objects can be solved, and the Matthew phenomenon can be avoided. In addition, a large number of objects can be recalled through category identifiers, which improves the efficiency of recall. The recalled objects can concurrently include new objects, hot objects, etc., thus fulfilling the diversity of recall.

A first category identifier can represent an object category corresponding to an object, and the object category can be set in advance, or can be set as an attribute of the object itself, etc. In addition, objects can also be grouped by a division method, so that different object groups can represent different object categories, etc.

Therefore, in some embodiments, determining the first category identifier(s) corresponding to the sample object(s) matching the sample user(s) may include:
determining at least one object group to which the sample object(s) matching the sample user(s) belong(s); and generating the first category identifier(s) corresponding to the sample object(s) according to group identifier(s) of the at least one object group.

The recall candidate set includes one or more object groups hit by the at least one second category identifier.

An object data set can be divided into multiple object groups. In some embodiments, multiple objects in the object data set can be divided into multiple object groups according to object features.

The object data set can be composed of objects provided by object providers participating in a promotion task. For example, in an e-commerce scenario, the object data set can be composed of advertising products or promotional contents of advertising products provided by different merchants participating in a product promotion activity. The sample object(s) matching the sample user(s) can come from the object data set, etc. The object data set can be dynamically updated.

As an optional method, the above-mentioned method of dividing the multiple objects in the object data set into the multiple object groups according to object features may include:
hierarchically clustering the multiple objects in the object data set to form a tree clustering structure according to the object features;
determining the multiple object groups according to the tree clustering structure; and
generating grouping identifiers of the object groups according to a node identifier of at least one node involved in a path corresponding to any object group in the tree clustering structure.

In other words, the multiple objects in the object data set may be divided into the multiple object groups by hierarchical clustering.

Hierarchical clustering may divide the object data set at different levels to form a tree clustering structure. Dividing the object data set may adopt a "bottom-up" aggregation method or a "top-down" splitting method. The aggregation method may refer to first treating each object as a separate cluster, and then iteratively merging until all data points are included in a final cluster. The splitting method may refer to first starting from a single cluster with all objects, and iteratively splitting the cluster into smaller clusters until each cluster contains one object, etc.

Node identifier(s) of at least one node involved in a path corresponding to an object group in the tree clustering structure can be sorted and combined in an order of path from a root node to a leaf node, so as to form a group identifier.

For ease of understanding, a tree clustering structure shown in FIG. 2 may be referenced. This tree clustering structure includes multiple levels. Root node 1 is the first level. Root node 1 can correspond to the entire object data set, and this entirety can be used as a data group. The object data set can first be divided into two data groups as the second level, corresponding to node 2 and node 3 respectively. A data group corresponding to node 2 can be divided into three data groups, corresponding to node 4, node 5, and node 6 respectively. The data group corresponding to node 2 can also be divided into two data groups, corresponding to node 7 and node 8 respectively.

Optionally, a data group corresponding to the lowest node (i.e., leaf node) in the tree clustering structure can be used as an object group. Apparently, any data group can also be used as an object group, for example. Each object group is also a cluster obtained by clustering.

Degrees of object similarity between different objects can be calculated according to object features, and different levels correspond to different object grouping conditions. An object grouping condition can, for example, refer to a degree of object similarity being less than a similarity threshold, and different object grouping conditions can, for example, refer to different similarity thresholds. When the object features are vector features, the degree of object similarity can be represented by a vector distance, and the similarity threshold also refers to a vector distance threshold.

Clustering at each level can be implemented using a clustering algorithm, such as K-Means algorithm, etc., which is not limited in the present application.

A path corresponding to any object group in the tree clustering structure can refer to a traversal path from the root node to a node where the object group is located. When an object group is the lowest cluster, a group identifier can be obtained by combining multiple node identifiers involved in a path corresponding to the object group. For example, in combination with the schematic diagram shown in FIG. 2, for an object group corresponding to node 6, its path in the tree clustering result involves node 1, node 3, node 6, etc. If the node identifier of node 1 is 1, the node identifier of node 3 is 3, and the node identifier of node 6 is 6, the group identifier corresponding to the object group corresponding to node 6 can be expressed as (1, 3, 6).

When the multiple object groups refer to data groups corresponding to the lowest-level nodes, there is no intersection between objects of the multiple object groups. Therefore, the sample object(s) determined to match the sample user(s) belong(s) to only one object group, and a group identifier of the object group can be used as the first category identifier.

Apparently, when the sample object(s) belong(s) to multiple object groups, group identifiers of the multiple object groups can be combined to obtain the first category identifier.

As another optional method, dividing the multiple objects in the object data set into the multiple object groups according to the object features may include:
calculating degrees of object similarity between the multiple objects according to the object features; dividing the multiple objects in the object data set into the multiple object groups based on the degrees of object similarity between the multiple objects and different object grouping conditions; generating respective group identifiers corresponding to the multiple object groups by combining and considering an inclusion relationship between the multiple object groups.

In other words, the embodiments of the present application may not adopt a clustering algorithm, and a division of object groups may be realized by calculation.

An object grouping condition may, for example, refer to a degree of object similarity being less than the similarity threshold, etc., and different object grouping conditions may, for example, refer to different similarity thresholds, for example. When the object features are vector features, a degree of object similarity can be represented by a vector distance, and the similarity threshold also refers to a vector distance threshold.

A division of multiple object groups is performed according to different similarity thresholds, and there may be an inclusion relationship between the multiple object groups. A group identifier of each object group can be determined in combination with the inclusion relationship. For example, each object group can be composed of its own identifier and a group identifier of at least one object group to which it belongs. For example, object group 1 includes object group 2, and object group 2 includes object group 3. If the group identifier of object group 1 is 1, the group identifier of object group 2 is (1, 2), and the group identifier of object group 3 is (1, 2, 3).

In addition, in some embodiments, dividing the multiple objects in the object data set into the multiple object groups according to object features may include:
dividing a plurality of objects including at least cold objects, new objects, and hot objects in the object data set according to the object features to obtain the multiple object groups; establishing an index relationship between different objects in the object data set and object groups to which the different objects respectively belong.

Determining the at least one object group to which the sample obj ect(s) matching the sample user(s) belong(s) may include: searching an index relationship to determine the at least one object group to which the sample object(s) belong(s) according to the sample object(s) matching the sample user(s).

In other words, the object data set can be used to characterize indexing results of objects according to their own object features. An index relationship between different objects and their respective object groups can be established based on object identifiers and group identifiers, so that a corresponding group identifier can be determined by searching the index relationship according to an object identifier.

The object data set can include hot objects, cold objects, and new objects, etc. Each object group can include hot objects, cold objects, and new objects, so that new objects, cold objects, and hot objects can be associated with each other, so as to solve the cold start problem of new objects and the problem of low recall rate of cold objects.

According to the above two optional methods, multiple object groups can be obtained based on a division of object features, which will not be repeated herein.

In addition, the object features can be extracted and obtained using a feature extraction model, etc. In some embodiments, the method can also include:
obtaining attribute description information of the sample object(s), the attribute description information being in a form of a picture and/or a text; and extracting the object features of the sample object(s) from the object attribute information using a feature extraction model.

The attribute description information may include, for example, an object image and/or object description information, so the feature extraction model may extract object features based on the object image and/or the object description information. The object description information may be in a textual form. In order to further ensure the accuracy of the object features, the feature extraction model may be implemented using a pre-trained large model, such as a Clip (Contrastive Language-Image Pre-Training) model or a BLIP (Bootstrapping Language Image Pre-training) model, which may simultaneously process texts and images, and understand semantic connections between the images and the texts. Apparently, the present application is not limited thereto, and the feature extraction model may be trained from object images and/or object description information of sample objects selected from the object data set and the object features corresponding to the sample objects.

In some embodiments, in order to further improve the recall effect, using the at least one user feature and the category identifier(s) to train the recognition model may include:
selecting a pre-trained large language model as the recognition model; and training the recognition model using the at least one user feature and the category identifier(s) of the sample user(s).

Using the at least one user feature and the category identifier(s) to train the recognition model may include:
generating an input sequence according to text description information of the at least one user feature of the sample user(s); generating an output sequence according to the first category identifier(s); and training the recognition model using the input sequence and the output sequence.

A first category identifier may refer to a group identifier of an object group to which a sample object matching a sample user belongs. The object group can be determined by hierarchical clustering. When each object belongs to an object group, a group identifier thereof is obtained by combining multiple node identifiers. Therefore, multiple node identifiers can constitute an output sequence. The trained recognition model can be used to calculate respective matching probabilities of a target user with different node identifiers, and then a second category identifier composed of multiple node identifiers can be determined according to the matching probabilities.

An implementation of the pre-trained large language model (English: Large Language Model, abbreviated as: LLM) can refer to a deep learning model trained with a large amount of data. It can be implemented using a transformer structure, and can generate a natural language text or understand the meaning of a language text. Using a pre-trained large language model and training data as described above, i.e., performing fine-tuning and training the at least one user feature of the sample user(s) and the first category identifier(s), a recognition model of the embodiments of the present application can be obtained. The recognition model can be implemented, for example, using ChatGPT (Chat Generative Pre-trained Transformer) or LLaMa (Large Language Model Meta AI, Meta developed large language model) model, etc.

Since a large language model can be pre-trained based on a massive amount of data, the large language model has general knowledge, and so a recognition model obtained by using the large language model can understand users' portrait information more fully. For a new user, the preference information of the new user can be understood, so that the cold start problem of new users can be solved, thus being stronger in data generalization and being able to better deal with cold start and Matthew effect. Therefore, when using a large language model, in a practical application, a target user can refer to a new user or a cold user, so as to solve the cold start problem of new users or cold users. New users and cold users can also obtain recalled objects to improve the recall effect.

In addition, based on the feature expression capability of large language models, new objects, cold objects, and hot objects can also be associated with each other. Through interaction data between hot objects and users, new objects and cold objects can be quickly helped to get more exposure opportunities, thereby further solving the cold start problem of new objects caused by lack of data.

In addition, in order to facilitate training, in practical applications, model training can also be combined with Lora (Low-Rank Adaptation of Large Language Models) and/or P-tuning (Prompt tuning), and other methods, which are not limited in the present application.

As can be seen from the above description, a user data set can be divided to obtain multiple user groups. Therefore, in some embodiments, the method may also include:
dividing multiple users including at least new users, cold users and hot users in a user data set according to user attributes and/or user behaviors to obtain multiple user groups; and generating respective index identifiers corresponding to the multiple user groups.

Determining the at least one user feature of the sample user(s) may include: determining at least one user group to which the sample user(s) belong(s); and generating user feature(s) of the sample user(s) according to an index identifier of the at least one user group.

The at least one user feature of the target user may include a user feature generated according to an index identifier of at least one user group to which the target user belongs.

The user data set may include hot users, and may also include cold users and new users, etc. Each user group may include hot users, and may also include cold users and new users. As such, through user grouping, an index identifier of a user group may be used as a user feature, and new users, cold users and hot users can be associated with each other. Regardless of whether a sample user or a target user is a new user or a cold user, a model training or a recall by comparison can be implemented, so that the cold start problem of new users or cold users can be solved, and new users and cold users can also obtain recalled objects, thus improving the recall effect.

A user data set is divided according to user attributes and/or user behaviors. The user attributes and/or user behaviors can be used as data features, and degrees of user similarity between users can be calculated based on the data features, so that multiple object groups can be obtained according to the degrees of user similarity and different user grouping conditions.

Apparently, a hierarchical clustering method can also be adopted to hierarchically cluster multiple users in a user data set based on data features to form a tree clustering structure. Multiple user groups are determined according to the tree clustering structure. An index identifier of any user group can be generated according to a node identifier of at least one node involved in a path corresponding to that user group in the tree clustering structure.

A respective node identifier of at least one node involved in a path corresponding to a user group in the tree clustering structure can be sorted and combined according to an order of path from the root node to a leaf node, so as to form an index identifier.

Optionally, a cluster corresponding to the lowest node (i.e., a leaf node) in the tree clustering structure can be used as an object group. Apparently, any cluster can also be used as a user group, etc.

As can be seen from the above description, the technical solution of the embodiments of the present application can be applied to an advertising system, and an object can refer to a promotional product, or can refer to a promotional content corresponding to the promotional product. The promotional content can include a picture and/or a text.

When the object is a promotional content, an obj ect feature can be extracted from the promotional content, for example, by using a feature extraction model as described above, i.e., multiple promotional contents can be demarcated according to features of the promotional content itself.

In addition, as another optional method, since a promotional content corresponds to a promotional product, dividing the multiple objects in the object data set into the multiple object groups according to the object features may include:
determining product features of promotional products corresponding to multiple promotional contents in the object data set; and dividing the multiple promotional contents in the object data set into the multiple object groups according to the product features.

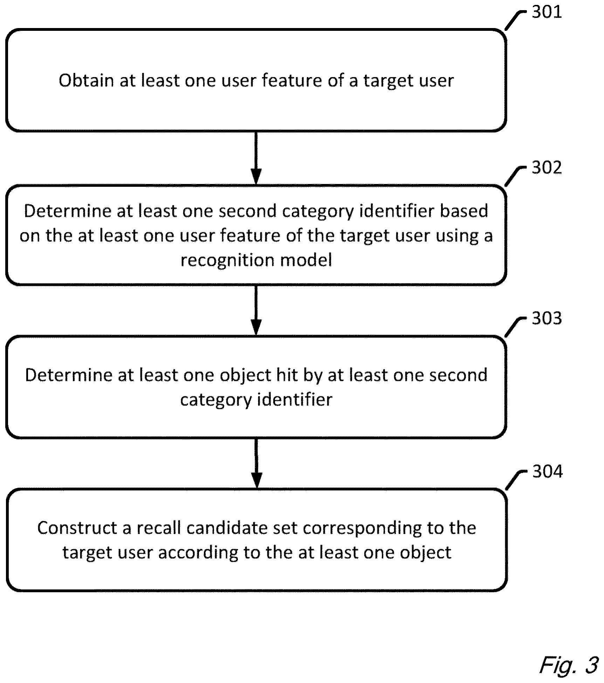

FIG. 3 is a flowchart of an example object processing method provided by the embodiments of the present application. This example implementation describes the technical solution of the embodiments of the present application from the perspective of object recall. This example implementation can be executed by a server. The method may include the following steps:
301: Obtain at least one user feature of a target user.

The target user may refer to any user, or a user that meets a recommendation requirement. The recommendation requirement may be, for example, performing a specific behavior such as entering a specific page or performing a purchase behavior.

Alternatively, it may be in response to a recommendation event to obtain at least one user feature of a target user. The recommendation event may be, for example, the target user performing a specific behavior such as entering a specific page, such as a home page or an object promotion page, or performing a purchase behavior. It may also be that the time period of registration of the target user being greater than a specified time. It may also be starting an event by a client corresponding to the target user, etc.

302: Determine at least one second category identifier based on the at least one user feature of the target user using a recognition model.

The recognition model is obtained by training using at least one user feature of sample user(s) and first category identifier(s) corresponding to sample object(s) matching the sample user(s).

303: Determine at least one object hit by at least one second category identifier.

At least one object hit by at least one second category identifier may be determined from an object data set.

304: Construct a recall candidate set corresponding to the target user according to the at least one object.

Specifically, objects hit by each second category identifier are grouped together to form a recall candidate set.

The recall candidate set is used to determine at least one target object for performing a recommendation operation to the target user.

In the embodiments of the present application, the recognition model is used to recall objects, which improves the recall effect. In addition, different objects can be associated with each other through category identifiers, so that new objects and cold objects can be associated with hot objects, thereby solving the cold start problem of new objects and avoiding the data Matthew phenomenon of cold objects.

In an implementation scenario, the recognition model can be implemented using a large language model. The target user can refer to a new user or a cold user, etc., so that the recognition model can determine at least one second category identifier matching the new user or the cold user based on at least one user feature of the new user or the cold user only, and then recall at least one object, thereby realizing object recall for the new user or the cold user. Since the large language model can be pre-trained based on a massive amount of data in various fields, the large language model has general knowledge. Therefore, the recognition model obtained using the large language model can understand users' portrait information more fully. For a new user or a cold user, even if he/she has fewer user behaviors, the recognition model of the embodiments of the present application can be used to obtain and understand preference information of the new user based on at least one user feature, so that at least one second category identifier matching therewith can be accurately determined to achieve object recall, thereby solving the cold start problem of new users, and having stronger data generalization, and being able to better deal with cold start and Matthew effect.

In addition, based on the feature expression capability of the large language model, new objects, cold objects and hot objects can also be associated with each other. Through interaction data between hot objects and users, new objects can be quickly helped, and cold objects can obtain more exposure opportunities, thereby further solving the cold start problem of new objects caused by lack of data.

In some embodiments, the first category identifier(s) can be generated according to a group identifier of at least one object group to which the sample object(s) matching the sample user(s) belong(s).

Then, determining the at least one object hit by the at least one second category identifier may include:
determining one or more object groups hit by the at least one second category identifier; and determining at least one object included in the one or more object groups.

All objects in each object group that is hit by the at least one second category identifier may constitute a recall candidate set. Therefore, the embodiments of the present application do not need to match a single object, but only need to determine the matching second category identifier, thereby determining an object group. All objects in the object group can be recalled as target objects, thus meeting the generalization requirement.

This can be that multiple objects in the object data set are demarcated according to object features to obtain multiple object groups.

In some embodiments, multiple objects in the object data set can be hierarchically clustered according to object features to form a tree clustering structure, and multiple object groups are determined according to the tree clustering structure.

Node identifiers of multiple nodes involved in a respective path corresponding to each object group in the tree clustering structure can be combined to form a group identifier of the respective object group.

Multiple clusters obtained from a clustering result of the lowest layer in the tree clustering structure can be used as multiple object groups. Therefore, each object belongs to only one object group, and there is no intersection between objects in the multiple object groups. Therefore, each second category identifier can be composed of multiple node identifiers. Therefore, in some embodiments, using the recognition model to determine the at least one second category identifier based on the at least one user feature of the target user may include:
using the recognition model, based on the at least one user feature of the target user, to determine respective matching probabilities of the target user with different node identifiers;
determining a second category identifier composed of multiple node identifiers whose combined probability meets a matching requirement, the combined probability being calculated based on matching probabilities of multiple node identifiers. For example, the combined probability can be a sum or an average value of the matching probabilities of the multiple node identifiers, etc.

The matching requirement may be, for example, the combined probability being greater than a specified probability threshold. Alternatively, as another optional method, the matching requirement may be a Top-K (first K) combined probability, wherein K is a predetermined number, and the predetermined number may be determined by considering practical needs. For example, for scenarios with high accuracy requirements, K may be set relatively small. For scenarios with high diversity requirements, K may be set relatively large. Therefore, determining the second category identifier composed of the multiple group identifiers whose combined probability meets the matching requirement, the matching combined probability being calculated based on the matching probabilities of at least one group identifier and may include: selecting a predetermined number of second category identifiers each composed of multiple node identifiers according to a rule of screening combined probabilities in a descending order.

In addition, the predetermined number may also be determined based on a page type currently located by the target user.

In addition, the predetermined number may also be determined based on a recommendation requirement met by the target user, etc.

The predetermined number may determine the number of second category identifiers that are determined, and so the number of objects that are recalled may be flexibly set by the predetermined number.

Optionally, a beam search may be used to find second category identifiers composed of multiple node identifiers with Top-K combined probabilities, but the present application is not limited thereto.

In addition, in order to reduce the amount of computation, etc., in some embodiments, using the recognition model to determine the at least one second category identifier based on the user features of the target user may include:
using the recognition model to determine the at least one second category identifier based on at least one user feature of the target user when detecting that the target user meets a recommendation condition.

In other words, at least one user feature of the target user may be collected first. When the target user meets the recommendation condition, the recognition model may be used to determine the at least one second category identifier corresponding thereto.

The recommendation condition may, for example, refer to the target user's registration time period being greater than a first time period, or the target user's user level being greater than a specified level; or the target user entering a specified page such as an object details page, an object promotion page, an order details page, or a shopping cart page; or the target user's browsing duration being greater than a second duration; or the target user performing a target behavior such as purchase, collection, or add-to-cart, etc., which may be set according to actual conditions.

In some embodiments, obtaining the at least one user feature of the target user may include: determining at least one user group to which the target user belongs; and generating a user feature corresponding to the target user based on an index identifier corresponding to the at least one user group.

An index identifier of each user group to which the target user belongs may be used as a user feature. Apparently, an index identifier corresponding to the at least one user group to which the target user belongs may be combined and sorted, and used as a user feature. Therefore, at least one user feature may include a user feature generated according to an index identifier of the at least one user group to which the target user belongs. Apparently, this may also include one or more of a user behavior, a user attribute, a user source, a search keyword, etc., which are not limited in the present application.

In addition, the embodiments of the present application also provide a recommendation method, which may include the following steps:
A: Obtain at least one user feature of a target user.
B: Determine at least one second category identifier based on at least one user feature of the target user using a recognition model, the recognition model being trained using at least one user feature of sample user(s) and first category identifier(s) corresponding to sample object(s) matched by the sample user(s).
C: Determine at least one object hit by the at least one second category identifier.
D: Construct a recall candidate set corresponding to the target user based on the at least one object.
E: Sort the recall candidate set, and determine at least one target object based on a sorting result.
F: Perform a recommendation operation to the target user based on the at least one target object.

Details of the above steps A to D can be found in the description of steps 301 to 304 in the embodiments shown in FIG. 3, and will not be repeated herein.

When the recall candidate set includes multiple objects, the recall candidate set can be sorted to determine at least one target object.

In some embodiments, the recall candidate set is sorted, and determining the at least one target object according to the sorting result may include:
calculating promotion values corresponding to multiple objects in the recall candidate set; sorting the promotion values in a descending order; and selecting the at least one target object from the sorting result in the descending order of the promotion value.

As an optional method, a promotion value of any object may refer to a degree of matching between that object and the target user.

A degree of matching may be calculated by obj ect features and user features. For example, when the object features and user features are represented by vectors, the degree of matching may be determined by calculating a vector distance. The greater the degree of matching is, the higher the promotion value is.

Apparently, a matching model may also be used to calculate a degree of matching between an object and a target user.

As another optional method, as can be known from the above description, an object data set may be constructed from objects provided by object providers participating in a promotion task. The object providers may participate in the promotion task for a fee.

Therefore, a promotion value of each object may refer to a reward resource provided by an object provider, such as a promotion fee.

Multiple promotion tasks participating in the promotion task may be set by an online system. The object data set may be dynamically updated and changed according to changes in the objects provided by the object providers participating in the promotion task. In a practical application, the promotion task may be, for example, an advertising task. An object provider may participate in the advertising task for a fee to obtain a better advertising promotion service, etc.

In addition, as another optional method, the object data set may include a first class of objects provided by object providers participating in the promotion task, and may also include a second class of objects other than the first class of objects.

Therefore, sorting the recall candidate set, and determining the at least one target object according to the sorting result may include:
taking a total promotion value corresponding to multiple objects in the recall candidate set to meet a value requirement as an optimization goal, and determining the at least one target object from multiple first class objects and multiple second class objects.

A promotion value of a first class object and a promotion value of a second class object may, for example, refer to respective degrees of matching with the target user, etc.

Apparently, a promotion value of a first class object may also refer to a reward resource paid by an object provider, such as a promotion fee, etc.

The value requirement may, for example, be the total promotion value being greater than a specified threshold, etc. The total promotion value may refer to a sum or an average value of promotion value(s) of at least one target object, etc., which is not limited in the present application.

Apparently, the recall candidate set may also be sorted by traditional rough sorting and fine sorting processing methods, etc., to finally obtain at least one target object. Details thereof are not repeated in the present application.

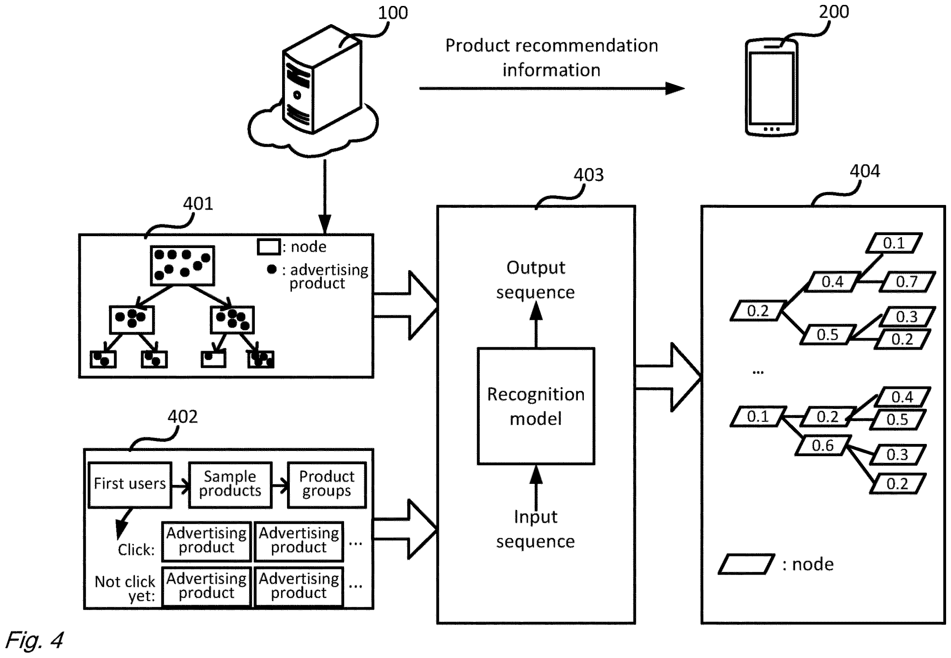

In a practical application, the technical solution of the embodiments of the present application can be applied to an e-commerce scenario. An e-commerce scenario is used below as an example, and the technical solution of the embodiments of the present application is described in combination with a scenario interaction diagram as shown in FIG. 4.

In an e-commerce scenario, an online system refers to an e-commerce system that provides commodity purchases. In order to facilitate users to understand commodities and realize purchases, the system can provide some pages, such as a commodity details page (which includes, for example, detailed information such as commodity price, origin, performance, and order prompts), a commodity promotion page (which includes, for example, promotion information of multiple commodities, each of which can be linked to a commodity details page), an order details page (which includes, for example, transaction details information), a shopping cart page (such as displaying prompt information of multiple commodities selected by a user in a list form, and being able to trigger an order operation for any commodity), etc.

In order to improve the recall effect when recommending products, in the embodiments of the present application, the server 100 in the recommendation system can first train a recognition model. The recommendation system can be the e-commerce system as described above, and apparently can also be another system independent of the e-commerce system. In a practical application, the recommendation system can be an advertising system, and promotional products provided by product providers participating in an advertising task can be used as advertising products for promotion to users, etc. Advertising products are used below mainly as an example for description.

The recognition model can use a pre-trained large language model.

The server 100 can hierarchically cluster 401 multiple advertising products included in an advertising product data set according to product features, so that the lowest cluster in a tree clustering structure can be used as a product group. Node identifiers of multiple nodes involved in a corresponding path in the tree clustering structure where each product group is located are combined as a group identifier of the respective product group. The advertising product data set can be composed of advertising products provided by product providers participating in an advertising task, and the product data set can be dynamically updated. By hierarchically clustering multiple advertising products, new products, cold products and/or hot products of a same category can be grouped together.

Afterwards, the server 100 can select sample users (for example, the sample users can be hot users, etc.) from historical record data, and then convert user behavior data and user attribute data of the hot users into text descriptions; determine that advertising products that the hot users click on are sample products, and take, according to respective product groups to which the sample products belong, group identifiers of the respective product groups as first category identifiers, so that a mapping relationship between the text descriptions and the first category identifiers can be established and used as training data 402.

The server 100 can train the recognition model 403 based on the training data, and the text descriptions can be processed by word segmentation to form an input sequence. Multiple node identifiers included in the first category identifiers constitute an output sequence. The recognition model can be trained using the input sequence and the output sequence. During the process of training, Lora and/or P-tuning can be performed in combination.

In addition, the server can also select a test user (for example, the test user can be a hot user, etc.) from the historical record data, obtain at least one user feature of the test user, and generate an input sequence corresponding to the test user, and generate an output sequence based on a group identifier of a commodity group in which an advertising commodity corresponds to a click behavior of the test user. Based on the input sequence, the recognition model can be verified, and the recognition model can be adjusted according to a difference between a model prediction result and the output sequence.

A new user is used as an example of the target user in the present example scenario. After the recognition model is deployed online, the server 100 can start collecting at least one user feature of the new user when the new user starts the user terminal 102, and identify and obtain, based on the generated recognition model, at least one second category identifier 404 that is matched therewith, when the new user meets a recommendation condition, such as entering a specified page, etc.

The recognition model can calculate respective matching probabilities of different node identifiers corresponding to each layer of nodes, and the server 100 can use a beam search to screen Top-k second category identifiers composed of node identifiers of different layers according to combined probabilities.

Afterwards, the server 100 may recall all the advertising products included in product groups hit by at least one second category identifier, and obtain a recall candidate set.

The server 100 may continue to perform sorting processing on the recall candidate set, and determine at least one target advertising product according to the sorting result. The server 100 may send product recommendation information of at least one target advertising product to the client 200, and the client 200 may display the product recommendation information, thereby achieving the purpose of recommending at least one target advertising product to the new user, so as to solve the cold start problem of new users. The at least one recalled advertising product includes new products or cold products, so as to solve the cold start problem of new products and the problem of low recall rate of cold products.

Through the embodiments of the present application, a generative modeling solution can be constructed based on the world knowledge of a large language model, which can fully understand users' portrait information, and learn general knowledge, such as preferences of users of a same type. Therefore, new users only need to input relevant features into the model in a form of "text description", which is equivalent to obtaining a same type of user preference information. For example, women in different countries prefer clothing products, etc., so as to better deal with the cold start of new users and the data Matthew problem, having stronger data generalization. For example, when a new user has a female attribute, the large language model can be used to understand that the new user also has preference information for clothing products, and thus more accurate recognition results can be obtained. Based on the feature representation capability of the large language model, new products and cold products can be associated with other hot products. Through interaction data between hot products and users, new products and cold products can be quickly helped to get more exposure opportunities, thereby solving the cold start problem of new products and cold products, and meeting the requirements of recall diversity. Based on product identifiers, product groups can be recalled without recalling each product individually, which improves the recall efficiency.

Based on a generative recall method, prediction can be made on the entire data space, which is more suitable for the recall stage that is aimed at all candidate sets. At the same time, by screening a predetermined number of second category identifiers, the diversity of recommendation results can be guaranteed.

In addition, the use of group identifiers can save training time and improve the efficiency of online update deployment. In addition, the technical solution of the embodiments of the present application does not require an additional scoring model, and the complexity of engineering link implementation is lower. At the same time, the end-to-end recall method also avoids the inconsistency between offline and online.

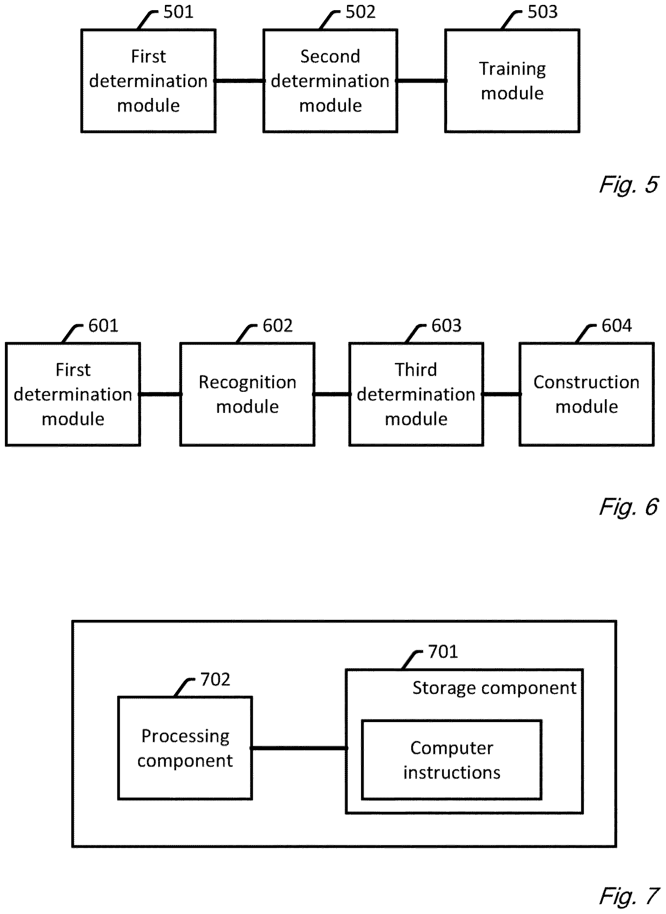

FIG. 5 is a schematic structural diagram of an example data processing apparatus provided by the present application, and the apparatus may include:
a first determination module 501, configured to determine at least one user feature of sample user(s);
a second determination module 502, configured to determine first category identifier(s) corresponding to sample object(s) matching the sample user(s); and
a training module 503, configured to train a recognition model using the at least one user feature of the sample user(s) and the first category identifier(s), wherein the recognition model is used to determine at least one second category identifier matching a target user based on at least one user feature of the target user, the at least one second category identifier is used to construct a recall candidate set corresponding to the target user, and the recall candidate set includes at least one object hit by the at least one second category identifier, and is used to determine at least one target object for performing a recommendation operation to the target user.

In some embodiments, the second determination module may specifically determine at least one object group to which the sample object(s) matching the sample user(s) belong(s); and generating the first category identifier(s) corresponding to the sample user(s) according to a group identifier of the at least one object group.

The recall candidate set includes one or more object groups hit by the at least one second category identifier.

In some embodiments, the apparatus may also include:
an object partitioning module, configured to divide multiple objects in an object data set into multiple object groups according to object features.

In some embodiments, the object partitioning module may specifically perform hierarchical clustering of multiple objects in an object data set according to object features to form a tree clustering structure; determine multiple object groups according to the tree clustering structure; and generate, based on a node identifier of at least one node involved in a path corresponding to any object group in the tree clustering structure, a group identifier of the object group.

In some embodiments, the object partitioning module may specifically calculate degrees of object similarity between multiple objects according to object features; divide multiple objects in the object data set into multiple object groups according to the degrees of object similarity between the multiple objects and different object grouping conditions; and generate respective group identifiers corresponding to the multiple object groups with consideration of an inclusion relationship between the multiple object groups.

In some embodiments, the training module may specifically: select a pre-trained large language model as the recognition model; generate an input sequence according to text description information of the at least one user feature of the sample user(s); generate an output sequence according to the first category identifier(s); and train the recognition model using the input sequence and the output sequence.

The data processing apparatus described in FIG. 5 can execute the data processing method described in the embodiments as shown in FIG. 1, and its principle of implementation and technical effects are not repeatedly described. The specific method in which each module and unit performs operations in the data processing apparatus in the above example implementation has been described in detail in the implementation of the method, and will not be described in detail herein.

FIG. 6 is a structural schematic diagram of an example object processing apparatus provided by the present application, and the apparatus may include:
a first acquisition module 601, configured to obtain at least one user feature of a target user;
a recognition module 602, configured to determine at least one second category identifier based on the at least one user feature of the target user using a recognition model, the recognition model being obtained by training using at least one user feature of sample user(s) and first category identifier(s) corresponding to sample object(s) matched by the sample user(s);
a third determination module 603, configured to determine at least one object hit by at least one second category identifier; and
a construction module 604, configured to construct a recall candidate set corresponding to the target user based on at least one object, wherein the recall candidate set is used to determine a target object, and perform a recommendation operation to the target user based on the target object. At least one target object for performing a recommendation operation to the target user is determined therefrom.

In some embodiments, the second category identifier may include multiple node identifiers.

The recognition module may specifically use the recognition model to determine matching probabilities between the target user and different node identifiers based on the at least one user feature of the target user; determine a second category identifier composed of multiple node identifiers whose combined probability meets a matching requirement, wherein the combined probability is calculated based on respective matching probabilities of multiple node identifiers. For example, the combined probability may be a sum or an average of the matching probabilities of the multiple node identifiers.

The third determination module may specifically determine one or more object groups hit by the at least one second category identifier; determine at least one object included in the one or more object groups, wherein object groups are obtained by hierarchically clustering multiple objects in an object data set based on object features.

In some embodiments, the third determination module may specifically select a predetermined number of second category identifiers composed of at least one node identifier according to a screening rule of combined probabilities in a descending order.

In some embodiments, the apparatus may further include:
a quantity determination module, configured to determine a predetermined number corresponding to a recommendation requirement according to the recommendation requirement met by the target user; or determine a corresponding predetermined number according to a page type of a page where the target user is currently viewing.

In some embodiments, the apparatus may further include:
a recommendation module, configured to sort the recall candidate set, determine at least one target object according to a sorting result, and perform a recommendation operation to the target user based on the at least one target object.

In some embodiments, the object includes a promotional product or promotional content corresponding to the promotional product. The recommendation module performs the recommendation operation to the target user based on the at least one object, which includes:
generating product recommendation information of at least one target promotional product, and sending the product recommendation information to a client, to cause the client to output the product recommendation information, so as to recommend the at least one target promotional product to the target user; or
sending at least one target promotional content to the client, to cause the client to output the at least one target promotional content, so as to recommend a promotional product corresponding to the at least one target promotional content to the target user.

In some embodiments, the recommendation module sorts the recall candidate set, and determines the at least one target object according to the sorting result, which includes: calculating promotion values corresponding to multiple objects in the recall candidate set; sorting the multiple objects in a descending order according to the promotion values; selecting the at least one target object from the sorting result in the descending order according to the promotion values; or
determining multiple first-class objects and multiple second-class objects in the recall candidate set; calculating promotion values corresponding to the multiple first-class objects and the multiple second-class objects; determining the at least one target object from the multiple first-class objects and the multiple second-class objects by taking a total promotion value corresponding to the multiple objects in the recall candidate set satisfying a value requirement as an optimization goal.

In some embodiments, the recognition module may specifically determine the at least one second category identifier based on the at least one user feature of the target user using the recognition model when detecting that the target user meets a recommendation condition.

In some embodiments, the first acquisition module may specifically generate the at least one user feature of the target user according to attribute information and user behavior data of the target user.

In some embodiments, the first acquisition module may obtain the at least one user feature of the target user in response to a recommendation event.

The object processing apparatus described in FIG. 6 may execute the object processing method described in the embodiments as shown in FIG. 3, and its principle of implementation and technical effects are not repeated herein. The specific method in which each module and unit performs operations in the object processing apparatus in the above example implementation has been described in detail in the implementation of the method, and will not be described in detail herein.

The embodiments of the present application also provide a computing device, as shown in FIG. 7, which may include a storage component 701 and a processing component 702.

The storage component 701 stores one or more computer instructions, wherein the one or more computer instructions are called and executed by the processing component 702 to implement the data processing method shown in FIG. 1 or the object processing method shown in FIG. 3.

Apparently, the computing device may also include other components, such as an input/output interface, a display component, a communication component, etc.

The input/output interface provides an interface between the processing component and a peripheral interface module. The peripheral interface module may be an output device, an input device, etc. The communication component is configured to facilitate wired or wireless communication between the computing device and other devices, etc.

The processing component may include one or more processors to execute computer instructions to complete all or part of the steps in the above methods. Apparently, the processing component can also be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above methods. The storage component is configured to store various types of data to support operations at a terminal. The storage component can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

It should be noted that the above computing device can be a physical device or an elastic computing host provided by a cloud computing platform, etc. It can be implemented as a distributed cluster consisting of multiple servers or terminal devices, or can be implemented as a single server or a single terminal device.

The embodiments of the present application also provide a computer-readable storage medium, which stores a computer program. The computer program, when executed by a computer, can implement the example data processing method as shown in FIG. 1 or the example object processing method as shown in FIG. 3. The computer-readable medium can be included in the electronic device described in the above embodiments, or can exist alone without being assembled into the electronic device.

The embodiments of the present application also provide a computer program product, which includes a computer program carried on a computer-readable storage medium. The computer program, when executed by a computer, can implement the example data processing method as shown in FIG. 1 or the example object processing method as shown in FIG. 3. In these embodiments, the computer program can be downloaded and installed from a network, and/or installed from a removable medium. When the computer program is executed by the processor, various functions defined in the system of the present application are executed.

It should be noted that the use of user data may be involved in the embodiments of the present application. In practical applications, user-specific personal data can be used in the solution described herein within the scope permitted by applicable laws and regulations in accordance with the requirements of applicable laws and regulations of the country where it is located (for example, a user's explicit consent, the user is effectively notified, etc.).

One skilled in the art can clearly understand that for the convenience and simplicity of description, specific working processes of the foregoing systems, apparatuses and units can be referred to corresponding processes in the aforementioned method embodiments, and will not be repeated herein.

The apparatus embodiments described above are only schematic, wherein the unit described as a separate component may or may not be physically separated, and the component displayed as a unit may or may not be a physical unit, i.e., may be located in a single place, or may be distributed on multiple network units. Some or all of the modules can be selected according to actual needs to achieve the purpose of the solution of the embodiments of the present application. One of ordinary skill in the art can understand and implement it without making any creative effort.

Through the description of the above implementation methods, one skill in the art can clearly understand that each implementation method can be implemented by means of software plus necessary general hardware platform, and apparently can also be implemented by hardware. Based on this understanding, the above technical solution, in essence, or the part that contributes to existing technologies, can be embodied in a form of a software product. Such computer software produce can be stored in a computer-readable storage medium, such as ROM/RAM, a disk, an optical disk, etc., and includes multiple instructions for a computing device (which can be a personal computer, a server, or a network device, etc.) to execute the methods described in each embodiment or some parts of the embodiments.

Finally, it should be noted that the above embodiments are only used to illustrate, but are not used to limit the technical solution of the present application. Although the present application is described in detail with reference to the above embodiments, one of ordinary skill in the art should understand that they can still modify the technical solution recorded in the above embodiments, or replace some of the technical features therein by equivalence. Such modifications or replacements do not make the essence of the corresponding technical solution deviate from the spirit and scope of the technical solution of the embodiments of the present application.

## Claims

1. A data processing method, comprising:
determining (101) at least one user feature of sample users;
determining (102) first category identifiers corresponding to sample objects matching the sample users; and
training (103) a recognition model using the at least one user feature of the sample users and the first category identifiers, wherein:
the recognition model is used to determine at least one second category identifier matching a target user based on at least one user feature of the target user;
the at least one second category identifier is used to construct a recall candidate set corresponding to the target user; and
the recall candidate set includes at least one object hit by the at least one second category identifier, and is used to determine at least one target object for performing a recommendation operation to the target user.

2. The method according to claim 1, further comprising:
dividing multiple objects in an object data set into multiple object groups according to object features, wherein determining (102) the first category identifiers corresponding to the sample objects matching the sample users comprises:
determining at least one object group to which the sample objects matching the sample users belong; and
generating the first category identifiers corresponding to the sample objects according to a group identifier of the at least one object group, wherein the recall candidate set includes one or more object groups hit by the at least one second category identifier.

3. The method according to claim 2, wherein dividing the multiple objects in the object data set into the multiple object groups according to the object features comprises:
hierarchically clustering the multiple objects in the object data set to form a tree clustering structure based on the object features; determining the multiple object groups according to the tree clustering structure; and generating, according to a node identifier of at least one node involved in a path corresponding to any object group in the tree clustering structure, a group identifier of the object group; or
calculating degrees of object similarity between the multiple objects based on the object features; dividing the multiple objects in the object data set into the multiple object groups based on the degrees of object similarity between the multiple objects and different object grouping conditions; and generating respective group identifiers corresponding to the multiple object groups with consideration of an inclusion relationship between the multiple object groups.

4. The method according to any of the claims 1 to 3, wherein training (103) the recognition model using the at least one user feature of the sample users and the category identifiers comprises:
selecting a pre-trained large language model as the recognition model;
generating an input sequence according to text description information of the at least one user feature of the sample users;
generating an output sequence according to the first category identifiers; and
training the recognition model using the input sequence and the output sequence.

5. The method according to any of the claims 2 to 4, further comprising:
obtaining attribute description information of the sample objects, the attribute description information being in a form of pictures and/or texts; and
using a feature extraction model to extract object features of the sample objects from the object attribute information, wherein:
dividing the multiple objects in the object data set into the multiple object groups according to the object features comprises:
dividing a plurality of objects including at least cold objects, new objects and hot objects in the object data set according to the object features to obtain the multiple object groups; and
establishing an index relationship between different objects in the object data set and the object groups to which the different objects belong;
determining the at least one object group to which the sample objects matching the sample users belong comprises:
searching the index relationship according to the sample objects matching the sample users to determine the at least one object group to which the sample objects belong.

6. The method according to any of the claims 1 to 5, further comprising:
dividing multiple users including at least new users, cold users and hot users in a user data set according to user attributes and/or user behaviors to obtain multiple user groups; and
generating index identifiers corresponding to the multiple user groups, wherein determining the at least one user feature of the sample users includes:
determining at least one user group to which the sample users belong; and
generating user features of the sample users according to an index identifier of the at least one user group.

7. The method according to any of the claims 2 to 6, wherein the objects comprise promotional contents corresponding to promotional products, wherein dividing the multiple objects in the object data set into the multiple object groups according to the object features comprises:
determining product features of the promotional products corresponding to the multiple promotional contents in the object data set; and
dividing the multiple promotional contents in the object data set into the multiple object groups according to the product features.

8. An object processing method, comprising:
obtaining (301) at least one user feature of a target user;
using a recognition model to determine (302) at least one second category identifier based on at least one user feature of the target user, the recognition model being trained using at least one user feature of sample users and first category identifiers corresponding to sample objects matching the sample users;
determining (303) at least one object hit by the at least one second category identifier; and
constructing (304) a recall candidate set corresponding to the target user based on the at least one object, the recall candidate set being used to determine at least one target object for performing a recommendation operation to the target user.

9. The method according to claim 8, wherein:
the second category identifier is composed of multiple node identifiers;
using the recognition model to determine (302) the at least one second category identifier based on the at least one user feature of the target user comprises:
using the recognition model to determine matching probabilities between the target user and different node identifiers based on the at least one user feature of the target user; and
determining a second category identifier composed of multiple node identifiers whose combined probability meets a matching requirement, the combined probability being calculated based on the matching probabilities of the multiple node identifiers;
determining (303) the at least one object hit by the at least one second category identifier comprises:
determining one or more object groups hit by the at least one second category identifier, the object groups being obtained by hierarchically clustering multiple objects in an object data set based on object features; and
determining at least one object included in the one or more object groups.

10. A recommendation method, comprising:
obtaining (301) at least one user feature of a target user;
using a recognition model to determine (302) at least one second category identifier based on at least one user feature of the target user; the recognition model being trained using at least one user feature of sample users and first category identifiers corresponding to sample objects matching the sample users;
determining (303) at least one object hit by the at least one second category identifier;
constructing (304) a recall candidate set corresponding to the target user based on the at least one object;
sorting the recall candidate set, and determining at least one target object according to a sorting result; and
performing a recommendation operation to the target user based on the at least one target object.

11. The method according to claim 10, wherein the object comprises a promotional product or a promotional content corresponding to the promotional product, and performing the recommendation operation to the target user based on the at least one target object comprises:
generating product recommendation information of at least one target promotional product, and sending the product recommendation information to a user terminal, to cause the user terminal to output the product recommendation information, so as to recommend the at least one target promotional product to the target user; or
sending at least one target promotional content to the user terminal, to cause the user terminal to output the at least one target promotional content, so as to recommend a promotional product corresponding to the at least one target promotional content to the target user.

12. The method according to claim 10 or 11, wherein sorting the recall candidate set, and determining the at least one target object according to the sorting result, comprise:
calculating promotion values corresponding to multiple objects in the recall candidate set, sorting the promotion values in a descending order, and selecting the at least one target object from the sorting result in the descending order of the promotion values; or
determining multiple first-class objects and multiple second-class objects in the recall candidate set, calculating promotion values corresponding to the multiple first-class objects and the multiple second-class objects, and determining the at least one target object from the multiple first-class objects and the multiple second-class objects by taking a total promotion value corresponding to the multiple objects in the recall candidate set satisfying a value requirement as an optimization goal.

13. The object processing method according to any of claims 8 to 9, or the recommendation method according to any of claims 10 to 12, wherein the recognition model is trained according to the data processing method according to any of the claims 1 to 7.

14. A computing device (100), comprising: a processing component (702) and a storage component (701), wherein:
the storage component (701) is configured to store one or more computer instructions;
the one or more computer instructions are used to be called and executed by the processing component (702) to implement the data processing method according to any one of claims 1-7, or the object processing method according to any one of claims 8, 9 or 13, or the recommendation method according to any one of claims 10-13.

15. A computer-readable storage medium (701), wherein:
a computer program is stored therein, and
when the computer program is executed by a computer (100), the data processing method according to any one of claims 1-7, or the object processing method according to any one of claims 8, 9 or 13, or the recommendation method according to any one of claims 10-13 is implemented.
